# EUROPEAN PATENT SPECIFICATION

(11) **EP 1 196 972 B1**
(45) Date of publication and mention of the grant of the patent: **27.10.2004**
(21) Application number: 00940638.0
(22) Date of filing: 28.06.2000
(51) Int. Cl.: H02B 1/01

(54) **FRAME STRUCTURE FOR AN ENCLOSURE FOR ELECTRICAL EQUIPMENT**
RAHMENSTRUKTUR FÜR EIN GEHÄUSE FÜR ELEKTRISCHE ANLAGE
STRUCTURE DE CHASSIS D'UNE ENCEINTE D'EQUIPEMENT ELECTRIQUE

(30) Priority: 28.06.1999 GB 9915040
(43) Date of publication of application: 17.04.2002
(73) Proprietor: Cooper B-Line Limited, Highbridge, Somerset TA9 4AQ (GB)
(72) Inventor: WRIGHT, Colin Morgan, Somerset TA8 2DQ (GB)
(74) Representative: Bardo, Julian Eason
(86) International application number: PCT/GB2000/002478
(87) International publication number: WO 2001/001533

(56) References cited:
- FR-A- 2 432 638
- FR-A- 2 566 222
- US-A- 3 305 255
- US-A- 5 713 651

## Description

The invention relates to a frame structure for a rack for electrical equipment. The invention also relates to a rack for electrical equipment, and to a flat pack from which such a rack can be formed. The rack will usually be clad with panels and thus take the form of what is referred to herein as an enclosure, but it may also be used without such panels.

It is well known to provide an enclosure that comprises a frame made up of various members with panels secured over the frame. At least some of the panels may be detachable to improve access to the frame. Commonly, the frame is a cuboidal frame and the frame members are connected to one another at each of the corners of the frame. Thus, at each corner one vertical member and two horizontal members are connected together. To assemble the frame, it is then necessary merely to complete whatever assembly is required at each corner.

A wide variety of arrangements for corner connections of frame members are known. One common approach is to provide as a separate member a corner joint having three orthogonal projections each of which provides a fixing facility for a respective frame member. Providing such an additional member can be very effective but leads to additional cost and complication.

It is an object of the invention to provide a frame structure which is effective but is inexpensive to manufacture and/or easy to assemble.

In a first aspect, the present invention provides a frame structure for a rack for electrical equipment, the frame structure comprising a plurality of elongate members which are joined together at corners of the structure, the frame structure including a corner joint at which two horizontal frame members and one vertical frame member are joined together, the horizontal frame members and the vertical frame member including portions which are juxtaposed to one another and are secured together by a common fastener engaging the juxtaposed portions of the three frame members, a first one of the frame members being of hollow section and a second one of the frame members passes through an opening in a wall of the first frame member.

The frame structure can be made inexpensively and yet be easy to assemble because no additional corner member need be provided and a common fastener is used to join together the three frame members that form the corner joint, thereby offering a reduction in the total number of fastening operations that are required.

It is an especially advantageous feature of the invention that at least one, and preferably each, of the three frame members that form the corner joint are formed from sheet metal bent into the desired shape. In that way, assembly can be simplified and construction costs can be reduced.

Preferably a hole is provided in each of the three portions and the common fastener passes through the holes. The fastener may for example comprise male and female threaded parts. Instead of a hole a part of a member may be omitted or cut-away to provide a gap or slot or some other opening and it is also possible, although not preferred, for two of the juxtaposed portions on opposite outer sides of the middle juxtaposed portion to have an appropriate fastening means engaging their inner faces in some way and thereby securing the members together.

Forming a frame member as a member of hollow section is not itself a novel proposal and frame members of a variety of hollow sections are known *per se*. By arranging for a second one of the frame members to pass through an opening in a wall of the first frame member, it becomes possible to maintain substantial strength for the first frame member whilst facilitating the securing together of all three frame members by a common fastener. The opening may comprise a cut-away portion in the form of a slot but is preferably a substantially rectangular hole. The size of the rectangular hole is preferably such that the second frame member fits freely, but preferably snugly, through the hole. In that case assembly remains straightforward and indeed alignment of the members for fastening can be facilitated; furthermore extra resistance is provided against distortion of the corner joint after assembly.

Preferably a third one of the frame members passes through an opening in a further wall of the first frame member. Again the opening in the further wall is preferably defined by a substantially rectangular hole, and the third frame member is preferably a snug fit in the hole.

Preferably, the second frame member is of hollow section and the third frame member passes through an opening in a wall of the second frame member. In an embodiment of the invention described below, the opening in the wall of the second frame member is defined by cut-away portions of a pair of walls (flanges) of the second frame member; another possibility, however, would be to provide a rectangular hole. With arrangements of the kind just described it becomes a simple matter to arrange for portions of the three members to be juxtaposed to one another and secured together by a common fastener, but at the same time to provide a strong fixing. For example, this can easily be arranged by providing an end wall on the third frame member perpendicular to its longitudinal axis.

Various orientations of the corner joint are workable, but preferably the first frame member referred to above is the vertical frame member.

Where a frame member is formed from sheet metal bent into the desired shape, any opening in the frame member can be formed by punching out the metal that is not required, preferably before the metal is bent into the desired shape. Also any required flanges can simply be formed as part of the frame member by appropriate bending. Furthermore a frame member need not have a closed section but may for example be formed with a longitudinal slot along all or part of one side of the frame member.

Whilst reference is made above to a common fastener engaging the juxtaposed portions of the frame members, it should be understood that further fasteners may be provided engaging the same juxtaposed portions of the frame members or other parts of two or all three frame members. Thus, at least two of the frame members may include further portions which are juxtaposed to one another and extend in planes transverse to the planes of the first-mentioned juxtaposed portions, the further juxtaposed portions being secured together by a further common fastener engaging the further juxtaposed portions. In both embodiments of the invention described below a further fastener engages further juxtaposed portions of the second and third frame members. In one of the embodiments of the invention described below a further fastener engages the juxtaposed portions of the vertically extending frame member and the second frame member. In the case where the first frame member extends vertically, the further fastener may also serve as a fastening location for a top panel of the enclosure (if the corner joint is at the top of the enclosure) or for a bracket supporting a castor or the like (if the corner joint is at the bottom of the enclosure) .

Preferably, the structure includes eight corner joints that are all substantially identical to each other, and the horizontally extending frame members are all substantially identical to each other. In that way assembly can be simplified and manufacturing costs can be reduced. Furthermore the cross-sectional shape of the second and third members can conveniently be identical.

Preferably, the frame structure is substantially cuboidal.

In a second aspect, the present invention provides a frame structure for a rack for electrical equipment, the frame structure comprising a plurality of elongate members which are joined together at corners of the structure, the frame structure including a corner joint at which two horizontal frame members and one vertical frame member are joined together, a first one of the frame members being of hollow section and a second one of the frame members passing through an opening in a wall of the first frame member.

The frame structure according to the second aspect of the invention may further comprise any of the features of the frame structure according to the first aspect of the invention.

Where reference is made herein to an "enclosure", the term "enclosure" should not be taken to imply that there are continuous walls defining a fully closed space. In general it is desirable for there to be panels fitted to the frame structure in order both for the connections to be protected and for persons to be protected from the connections. It should be understood however, that it is within the scope of the present invention to provide an enclosure with only some panels or indeed a rack without any panels.

The present invention further provides a rack for electrical equipment comprising a frame structure according to the invention. Preferably the rack is an enclosure and includes one or more panels secured to the frame structure.

The present invention further provides a flat pack comprising a plurality of frame members for assembly on site into a rack for electrical equipment as defined above.

Preferably the rack or enclosure is suitable for having connections of cables in a telecommunications or data communications network.

By way of example, an embodiment of the invention will now be described with reference to the accompanying drawings, of which:
- Fig. 1: is a perspective view of a portion of a skeleton frame structure for a rack for telecommunications or data communications equipment;
- Fig. 2: is an exploded view of the portion of the structure shown in Fig. 1;
- Fig. 3: is a perspective view of a portion of a skeleton frame structure for a rack for telecommunications or data communications equipment, similar in many respects to that in Fig. 1
- Fig. 4: is an exploded view of the portion of the structure shown in Fig. 3; and
- Fig. 5: is a perspective view of an entire skeleton frame structure.

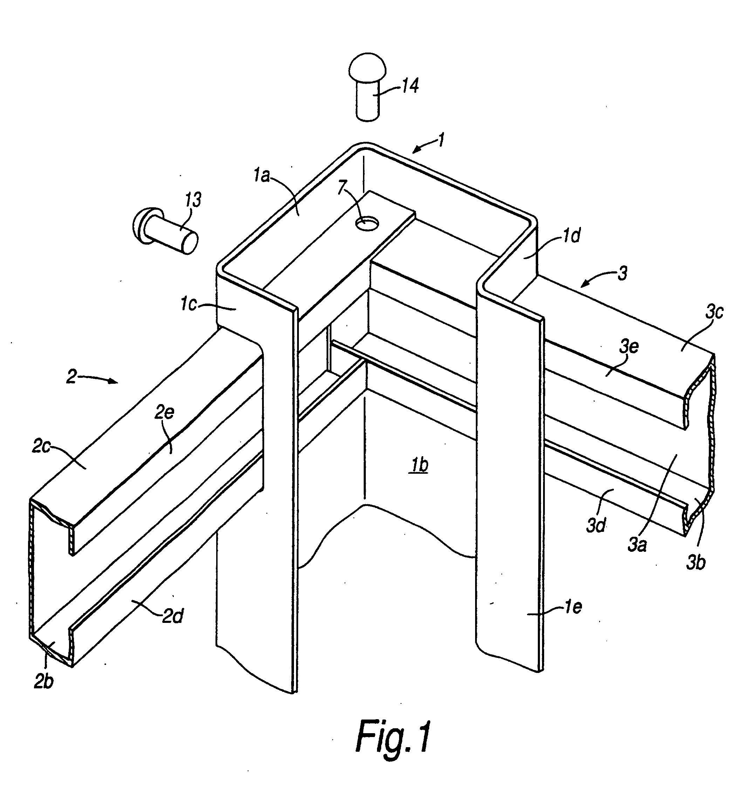

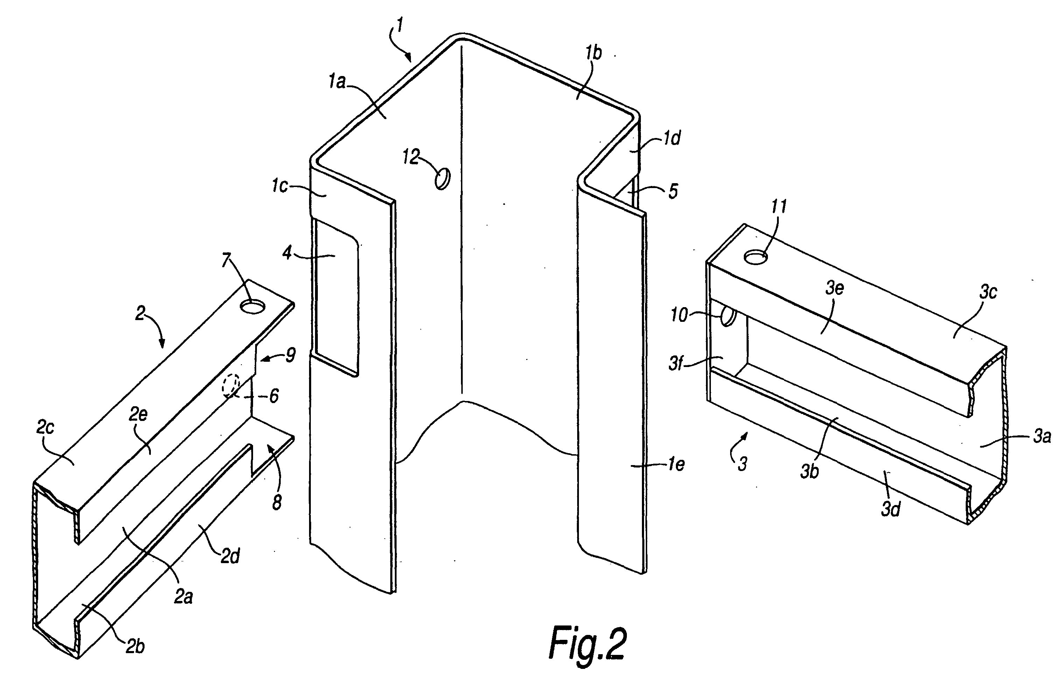

Figs. 1 and 2 show a corner portion of a skeleton frame structure for a rack (which may be clad with panels , to form an enclosure) suitable for housing connections of cables in a telecommunications or data communications network. The skeleton frame structure comprises four vertically extending frame members and eight horizontally extending frame members joined together at their ends to define a cuboid. The skeleton frame structure therefore includes eight corner joints each comprising one vertically extending frame member joined to two horizontally extending frame members. Figs. 1 and 2 illustrate one such corner joint. The other seven corner joints are substantially the same as that shown in Figs. 1 and 2.

The joint comprises a vertically extending member 1, a first horizontally extending member 2, and a second horizontally extending member 3. Only one end of each member is illustrated. It will be understood that one of the members 2, 3 will extend along a side of the frame structure and the other of the members 2, 3 will extend along the front or rear of the frame structure. In the particular example described the member 3 is a side member and the member 2 a rear member. All three members 1, 2, 3 are formed from sheet metal pressed into a desired configuration. The three members may'also be formed by extrusion, if desired.

The vertically extending member 1 is of generally square cross-section and comprises two adjacent, mutually perpendicular, outer walls 1a, 1b. The wall 1a is joined along one edge to the wall 1b and along an opposite edge to a wall 1c which extends inwardly from the wall 1a perpendicular thereto. A portion of the wall 1c is cut away to form a rectangular hole 4. The wall 1b is joined along one edge to the wall 1a and along an opposite edge to a wall 1d which extends inwardly from the wall 1b perpendicular thereto and carries a flange 1e on its distal edge, the flange 1e extending perpendicular to the wall 1d and away from the wall 1a. A portion of the wall 1d is cut-away to form a rectangular hole 5.

The rear member 2 is of generally rectangular cross-section and comprises an outer wall 2a joined along each of its opposite side edges to walls 2b, 2c which project inwardly perpendicular to the wall 2a. Each wall 2b, 2c is formed along its inner edge with an internal flange 2d, 2e respectively, those flanges being disposed in a common plane parallel to the wall 2a. The side member 3 is also of a similar generally rectangular cross-section including walls 3a, 3b, 3c and flanges 3d, 3e. Flanges 2d and 2e are each cut-away at their ends to leave gaps 8, 9 respectively, and circular holes 6, 7 are provided in the walls 2a, 2c respectively towards the ends of the walls. The side member 3 is formed with an end wall 3f perpendicular to the walls 3a, 3b, 3c and to the flanges 3d, 3e. A circular hole 10 is provided in the middle of the end wall 3f and a circular hole 11 is provided in the wall 3c towards the end of the wall. The corner joint is assembled by passing the illustrated end of the rear member 2 through the rectangular opening 4 in wall 1c of the vertically extending member 1 until the member 2 abuts the outer wall 1b of the member 1; at that stage, the circular hole 6 in the outer wall 2a of the rear member 2 is aligned with a circular hole 12 provided in the outer wall 1a of the vertically extending member 1. The side member 3 is then passed through the opening 5 in wall 1d of the vertically extending member 1 and subsequently through the gaps 8, 9 in the flanges 2d, 2e of the rear member 2 until the end wall 3f of the side member 3 abuts the inner side of the outer wall 2a of the rear member 2. At that stage, the hole 10 in the end wall 3f of the side member 3 is aligned with the hole 6 in the wall 2a of the rear member 2, and with the hole 12 in the outer wall 1a of the vertically extending member 1; also, the hole 11 in the wall 3c of the side member 3 is aligned with the hole 7 in the wall 2c of the rear member 2. The three members 1, 2, 3 are then secured together by passing a fastener 13 through holes 12, 6, 10. A fastener 14 can also be passed through holes 7, 11; such a fastener may be provided to fix a castor or other base member to the frame but may also have the effect of further strengthening the connection between the frame members.. If desired, for added strength, the three members 1, 2, 3 may each include a further hole (not shown) in their respective walls 1a, 2a and 3f, the three further holes being positioned such that, once the skeleton frame structure has been assembled, the three further holes are aligned and a further fastener can be passed through the holes. Conveniently the fastener in each case comprises a screw threaded bolt that is passed from the outside of the frame structure through the holes and engages a screw threaded female member fixed on the inner face of the innermost juxtaposed wall (the wall 3f for the fastener 13 and the wall 3c for the fastener 14).

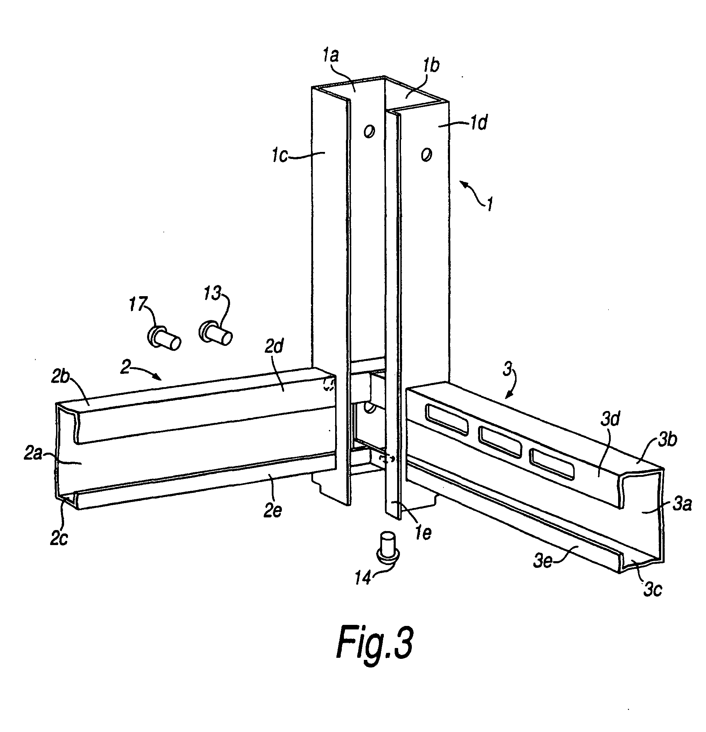

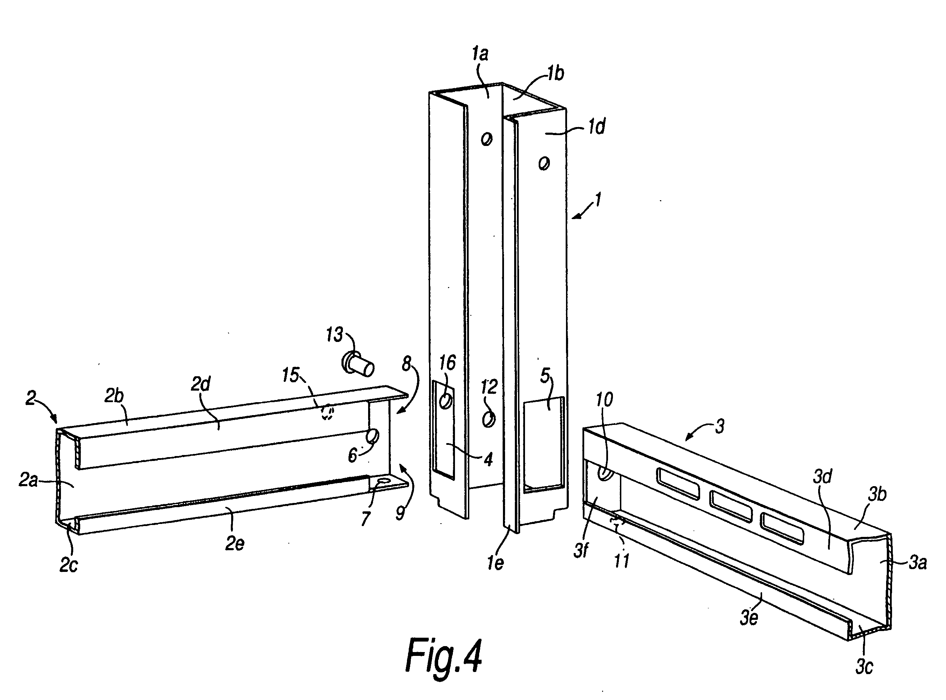

Figs. 3 and 4 show a corner portion of a skeleton frame structure for a rack, similar in many respects to that shown in Figs. 1 and 2. The same reference numerals are used to designate corresponding parts.

The following description of the particular example shown in Figs. 3 and 4 relates mainly to those aspects which differ from the example shown in Figs. 1 and 2.

In the outer wall 2a, of the rear member 2, there is provided, in addition to the circular hole 6, a second circular hole 15. In the outer wall 1a, of the vertically extending member 1, there is provided, in addition to the circular hole 12, a circular hole 16. The corner joint is assembled by passing the illustrated end of the rear member 2 through the rectangular opening 4 in wall 1c of the vertically extending member 1 until the member 2 abuts the outer wall 1b of the member 1; at that stage, the holes 6 and 15 in the outer wall 2a of the rear member 2 are aligned with the holes 12 and 16 respectively, provided in the outer wall 1a of the vertically extending member 1. The side member 3 is then passed through the opening 5 in wall 1d of the vertically extending member 1 and subsequently through the gaps 8, 9 in the flanges 2d, 2e of the rear member 2 until the end wall 3f of the side member 3 abuts the inner side of the outer wall 2a of the rear member 2. At that stage, the hole 10 in the end wall 3f of the side member 3 is aligned with the hole 6 in the wall 2a of the rear member 2, and with the hole 12 in the outer wall 1a of the vertically extending member 1; also, the hole 11 in the wall 3c of the side member 3 is aligned with the hole 7 in the wall 2c of the rear member 2. The three members 1, 2, 3 are then secured together by passing a fastener 13 through holes 12, 6, 10 (and, as in the earlier embodiment, a fastener 14 through holes 7, 11). The members 1 and 2 are then further secured together by passing a fastener 17 through holes 16, 15. Like the fasteners 13, 14, conveniently the fastener 17 comprises a screw threaded bolt that is passed from the outside of the frame structure through the holes and engages a screw headed female member fixed on the inner face of the inner most juxtaposed wall, that being the wall 2a.

The members 2 and 3 fit freely but snugly through the rectangular holes 4 and 5 in the member 1. The snug fit both facilitates assembly of the corner joint and resists any significant movement of one frame member relative to another.

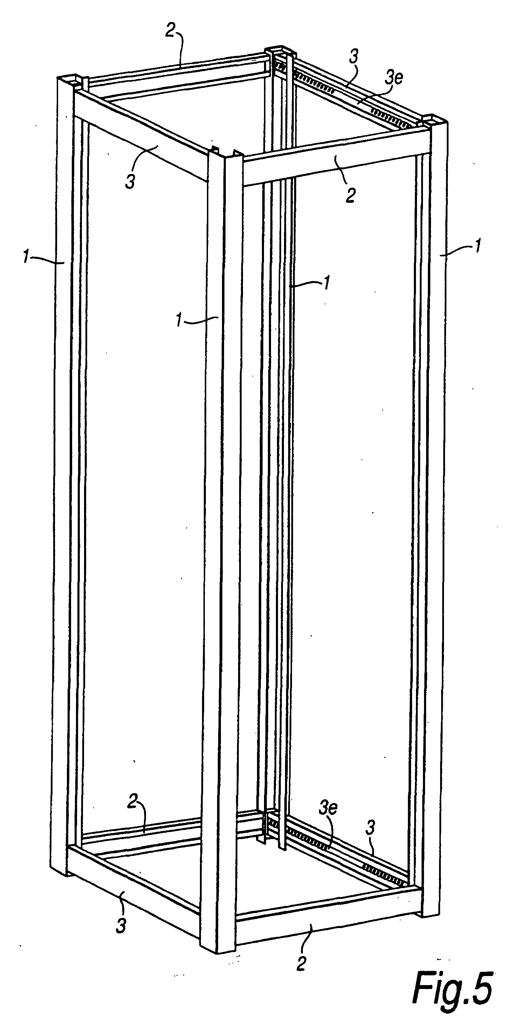

Fig. 5 shows a complete frame structure incorporating eight corner joints, each of which is substantially as described above. It will be appreciated that there are various options for the orientations of the various corner joints. In Fig. 5, the form of each end of each of the members 1, 2, 3 is the same, but another possibility for example would be to provide the member 2, one end of which is shown in Figs. 2 and 4, with its other end in the form of the end of member 3 that is shown in Figs. 2 and 4. In that case the other end of member 3 would be in the form of the end of member 2 that is shown in Figs. 2 and 4.

In Fig. 5, it may be seen that the side members 3 are provided on their flanges 3e with a row of holes to which for example mounting angles of a standard kind known *per se* may be fixed. Equipment such as cable connecting equipment and/or other electrical equipment can then be fixed to the mounting angles in the conventional way. Panels can also be attached to the frame structure by suitable means.

## Claims

1. A frame structure for a rack for electrical equipment, the frame structure comprising a plurality of elongate members (1,2,3) which are joined together at corners of the structure, the frame structure including a corner joint at which two horizontal frame members (2,3) and one vertical frame member (1) are joined together, the horizontal frame members (2,3) and the vertical frame member (1) including portions which are juxtaposed to one another and are secured together by a common fastener (13) engaging the juxtaposed portions of the three frame members, a first one of the frame members (1) being of hollow section and a second one of the frame members (2,3) passing through an opening (4,5) in a wall of the first frame member (1).

2. A frame structure according to claim 1, wherein at least one of the frame members (1,2,3) is formed by bending from sheet metal.

3. A frame structure according to claim 1 or claim 2, wherein each of the frame members (1,2,3) is formed by bending from sheet metal.

4. A frame structure according to any preceding claim, wherein the juxtaposed portion of one of the frame members (2) is sandwiched between the juxtaposed portions of the other two frame members (1,3).

5. A frame structure according to any preceding claim, in which a hole (12,6,10) is provided in each of the three portions and the common fastener (13) passes through the holes (12,6,10).

6. A frame structure according to any preceding claim, further including a second fastener (14,17) which engages and secures together two of the three frame members.

7. A frame structure according to any preceding claim, in which at least two of the frame members (1,2,3) include further portions which are juxtaposed to one another and extend in planes transverse to the planes of the first-mentioned juxtaposed portions, the further juxtaposed portions being secured together by a further common fastener engaging the further juxtaposed portions.

8. A frame structure according to claim 7, in which the further juxtaposed portions extend substantially horizontally.

9. A frame structure according to any preceding claim, in which the opening (4,5) is defined by a substantially rectangular hole.

10. A frame structure according to any preceding claim, in which a third one of the frame members (3,2) passes through an opening (5,4) in a further wall of the first frame member.

11. A frame structure according to claim 10, in which the opening (5,4) in the further wall is defined by a substantially rectangular hole.

12. A frame structure according to any preceding claim, in which the second frame member (2) is of hollow section and the third frame member (3) passes through an opening in a wall of the second frame member.

13. A frame structure according to claim 12, in which the opening in the wall of the second frame member (2) is defined by one or more cut-away portions in the second frame member.

14. A frame structure according to any preceding claim, in which the first frame member (1) is the vertical frame member.

15. A frame structure according to any preceding claim, wherein the structure includes eight corner joints that are all substantially identical to each other.

16. A frame structure according to any preceding claim, wherein the frame structure is substantially cuboidal.

17. A rack for electrical equipment comprising a frame structure according to any preceding claim.

18. A rack according to claim 17, in which the rack is an enclosure and includes one or more panels secured to the frame structure.

19. A rack according to claim 18, in which said at least one panel is releasable.

20. A flat pack comprising a plurality of frame members for assembling on site into a rack according to any of claims 17 to 19.

## Patentansprüche

1. Rahmenkonstruktion für ein Gestell für elektrische Einrichtungen, wobei die Rahmenkonstruktion eine Vielzahl von langgestreckten Elementen (1, 2, 3) aufweist, die an Ecken der Konstruktion miteinander verbunden sind, wobei die Rahmenkonstruktion eine Eckverbindung aufweist, an der zwei horizontale Rahmenelemente (2, 3) und ein vertikales Rahmenelement (1) miteinander verbunden sind, wobei die horizontalen Rahmenelemente (2, 3) und das vertikale Rahmenelement (1) Bereiche aufweisen, die aneinander grenzen und durch ein gemeinsames Befestigungselement (13), das mit den aneinander grenzenden Bereichen der drei Rahmenelemente in Eingriff ist, aneinander befestigt sind,
wobei ein erstes von den Rahmenelementen (1) ein Hohlprofil ist und ein zweites von den Rahmenelementen (2, 3) durch eine Öffnung (4, 5) in einer Wand des ersten Rahmenelements (1) hindurchgeht.

2. Rahmenkonstruktion nach Anspruch 1,
wobei mindestens eines von den Rahmenelementen (1, 2, 3) durch Biegen aus Blech gebildet ist.

3. Rahmenkonstruktion nach Anspruch 1 oder Anspruch 2,
wobei jedes von den Rahmenelementen (1, 2, 3) durch Biegen aus Blech gebildet ist.

4. Rahmenkonstruktion nach einem der vorhergehenden Ansprüche,
wobei der angrenzende Bereich von einem von den Rahmenelementen (2) zwischen den aneinander grenzenden Bereichen der anderen zwei Rahmenelemente (1, 3) sandwichartig angeordnet ist.

5. Rahmenkonstruktion nach einem der vorhergehenden Ansprüche,
wobei ein Loch (12, 6, 10) in jedem von den drei Bereichen vorgesehen ist und das gemeinsame Befestigungselement (13) durch die Löcher (12, 6, 10) hindurchgeht.

6. Rahmenkonstruktion nach einem der vorhergehenden Ansprüche,
die ferner ein zweites Befestigungselement (14, 17) aufweist, das mit zwei von den drei Rahmenelementen in Eingriff steht und diese aneinander befestigt.

7. Rahmenkonstruktion nach einem der vorhergehenden Ansprüche,
wobei mindestens zwei von den Rahmenelementen (1, 2, 3) weitere Bereiche aufweisen, die aneinander grenzen und sich in Ebenen quer zu den Ebenen der erstgenannten aneinander grenzenden Bereiche erstrecken, wobei die weiteren aneinander grenzenden Bereiche durch ein weiteres gemeinsames Befestigungselement, das mit den weiteren aneinander grenzenden Bereichen in Eingriff steht, aneinander befestigt sind.

8. Rahmenkonstruktion nach Anspruch 7,
wobei sich die weiteren aneinander grenzenden Bereiche im wesentlichen horizontal erstrecken.

9. Rahmenkonstruktion nach einem der vorhergehenden Ansprüche,
wobei die Öffnung (4, 5) von einem im wesentlichen rechteckigen Loch gebildet ist.

10. Rahmenkonstruktion nach einem der vorhergehenden Ansprüche,
wobei ein drittes von den Rahmenelementen (3, 2) durch eine Öffnung (5, 4) in einer weiteren Wand des ersten Rahmenelements hindurchgeht.

11. Rahmenkonstruktion nach Anspruch 10,
wobei die Öffnung (5, 4) in der weiteren Wand von einem im wesentlichen rechteckigen Loch gebildet ist.

12. Rahmenkonstruktion nach einem der vorhergehenden Ansprüche,
wobei das zweite Rahmenelement (2) ein Hohlprofil ist und das dritte Rahmenelement (3) durch eine Öffnung in einer Wand des zweiten Rahmenelements hindurchgeht.

13. Rahmenkonstruktion nach Anspruch 12,
wobei die Öffnung in der Wand des zweiten Rahmenelements (2) von einem oder mehreren ausgeschnittenen Bereichen in dem zweiten Rahmenelement gebildet ist.

14. Rahmenkonstruktion nach einem der vorhergehenden Ansprüche,
wobei das erste Rahmenelement (1) das vertikale Rahmenelement ist.

15. Rahmenkonstruktion nach einem der vorhergehenden Ansprüche,
wobei die Konstruktion acht Eckverbindungen aufweist, die alle im wesentlichen zueinander identisch sind.

16. Rahmenkonstruktion nach einem der vorhergehenden Ansprüche,
wobei die Rahmenkonstruktion im wesentlichen quaderförmig ist.

17. Gestell für elektrische Einrichtungen,
das eine Rahmenkonstruktion nach einem der vorhergehenden Ansprüche aufweist.

18. Gestell nach Anspruch 17,
wobei das Gestell eine Umhüllung bildet und eine oder mehrere Platten aufweist, die an der Rahmenkonstruktion befestigt sind.

19. Gestell nach Anspruch 18,
wobei die genannte mindestens eine Platte lösbar ist.

20. Flachgehäuse, das eine Vielzahl von Rahmenelementen zum Zusammenbau am Standort zu einem Gestell nach einem der Ansprüche 17 bis 19 aufweist.

## Revendications

1. Structure de châssis destinée à un bâti pour équipement électrique, la structure de châssis comprenant plusieurs éléments allongés (1, 2, 3) qui sont assemblés ensemble aux coins de la structure, la structure de châssis comprenant un assemblage de coin auquel deux éléments de châssis horizontaux (2, 3) et un élément de châssis vertical (1) sont assemblés ensemble, les éléments de châssis horizontaux (2, 3) et l'élément de châssis vertical (1) comprenant des parties qui sont juxtaposées l'une par rapport à l'autre et sont fixées ensemble par un élément de fixation commun (13) mettant en prise les parties juxtaposées des trois éléments de châssis, un premier élément des éléments de châssis (1) étant de section creuse et un second élément des éléments de châssis (2, 3) passant par une ouverture (4, 5) située dans une paroi du premier élément de châssis (1).

2. Structure de châssis selon la revendication 1, dans laquelle au moins l'un des éléments de châssis (1, 2, 3) est formé par pliage à partir d'une tôle métallique.

3. Structure de châssis selon la revendication 1 ou la revendication 2, dans laquelle chacun des éléments de châssis (1, 2, 3) est formé par pliage à partir d'une tôle métallique.

4. Structure de châssis selon l'une quelconque des revendications précédentes, dans laquelle la partie juxtaposée de l'un des éléments de châssis (2) est prise en sandwich entre les parties juxtaposées des deux autres éléments de châssis (1, 3).

5. Structure de châssis selon l'une quelconque des revendications précédentes, dans laquelle un trou (12, 6, 10) est prévu dans chacune des trois parties et l'élément de fixation commun (13) passe par les trous (12, 6, 10).

6. Structure selon l'une quelconque des revendications précédentes, comprenant en outre un second élément de fixation (14, 17) qui met en prise et fixe ensemble deux des trois éléments de châssis.

7. Structure de châssis selon l'une quelconque des revendications précédentes, dans laquelle au moins deux des éléments de châssis (1, 2, 3) comprennent des parties supplémentaires qui sont juxtaposées l'une par rapport à l'autre et s'étendent dans des plans transversaux aux plans des premières parties juxtaposées mentionnées, les parties supplémentaires juxtaposées étant fixées ensemble par un autre élément de fixation commun mettant en prise les parties juxtaposées supplémentaires.

8. Structure de châssis selon la revendication 7, dans laquelle les parties juxtaposées supplémentaires s'étendent sensiblement horizontalement.

9. Structure de châssis selon l'une quelconque des revendications précédentes, dans laquelle l'ouverture (4, 5) est définie par un trou sensiblement rectangulaire.

10. Structure de châssis selon l'une quelconque des revendications précédentes, dans laquelle un troisième élément des éléments de châssis (3, 2) passe par une ouverture (5, 4) dans une autre paroi du premier élément de châssis.

11. Structure de châssis selon la revendication 10, dans laquelle l'ouverture (5, 4), dans l'autre paroi est définie par un trou sensiblement rectangulaire.

12. Structure de châssis selon l'une quelconque des revendications précédentes, dans laquelle le second élément de châssis (2) est de section creuse et le troisième élément de châssis (3) passe par une ouverture dans une paroi du second élément de châssis.

13. Structure de châssis selon la revendication 12, dans laquelle l'ouverture située dans la paroi du second élément de châssis (2) est définie par une ou plusieurs parties découpées dans le second élément de châssis.

14. Structure de châssis selon l'une quelconque des revendications précédentes, dans laquelle le premier élément de châssis (1) est l'élément de châssis vertical.

15. Structure de châssis selon l'une quelconque des revendications précédentes, dans laquelle la structure comprend huit assemblages de coin qui sont sensiblement tous identiques entre eux.

16. Structure de châssis selon l'une quelconque des revendications précédentes, dans laquelle la structure de châssis est sensiblement cuboïdale.

17. Bâti pour équipement électrique comprenant une structure de châssis selon l'une quelconque des revendications précédentes.

18. Bâti selon la revendication 17, dans lequel le bâti est une enceinte et comprend un ou plusieurs panneaux fixés sur la structure de châssis.

19. Bâti selon la revendication 18, dans lequel ledit au moins un panneau est amovible.

20. Bloc plat comprenant une pluralité d'éléments de châssis pour l'assemblage sur site, dans un bâti selon l'une quelconque des revendications 17 à 19.
